# EUROPÄISCHE PATENTSCHRIFT

(11) **EP 0 680 834 B1**
(45) Veröffentlichungstag und Bekanntmachung des Hinweises auf die Patenterteilung: **01.10.1997**
(21) Anmeldenummer: 95106055.7
(22) Anmeldetag: 22.04.1995
(51) Int. Cl.: B41M 5/34, B41M 5/38, C09B 49/06, C09B 23/04, C07D 213/90

(54) **Thermische Übertragung von Pyridonfarbstoffen**
Thermotransfer of pyridone dyes
Thermotransfert de colorants pyridone

(30) Priorität: 02.05.1994 DE 4415358
(43) Veröffentlichungstag der Anmeldung: 08.11.1995
(73) Patentinhaber: BASF AKTIENGESELLSCHAFT, 67056 Ludwigshafen (DE)
(72) Erfinder: Sens, Rüdiger, Dr., D-68165 Mannheim (DE); Etzbach, Karl-Heinz, Dr., D-67227 Frankenthal (DE)

(56) Entgegenhaltungen:
- EP-A- 0 416 434
- EP-A- 0 569 784
- EP-A- 0 569 785
- WO-A-92/19684

## Beschreibung

Die vorliegende Erfindung betrifft ein neues Verfahren zur thermischen Übertragung von Methin- oder Azamethinfarbstoffen auf Thiazolopyridonbasis.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Aus der US-A-5 079 365 sowie aus der EP-A-569785 ist die thermische Übertragung von Thiazolmethinpyridonfarbstoffen bekannt. Es hat sich jedoch gezeigt, daß die dort zur Anwendung kommenden Farbstoffe noch anwendungstechnische Mängel aufweisen.

Aufgabe der vorliegenden Erfindung war es nun, ein neues Thermotransferdruck-Verfahren bereitzustellen, bei dem spezielle Methin- oder Azamethinfarbstoffe auf Thiazolopyridonbasis mit vorteilhaften anwendungstechnischen Eigenschaften auf das Substrat übertragen werden.

Es wurde nun gefunden, daß die Übertragung von Farbstoffen von einem Träger auf ein mit Kunststoff beschichtetes Papier durch Diffusion oder Sublimation mit Hilfe einer Energiequelle vorteilhaft gelingt, wenn man einen Träger verwendet, auf dem sich ein oder mehrere Pyridonfarbstoffe der Formel I 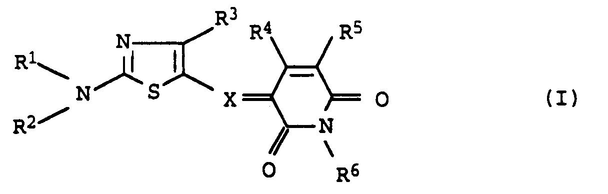 befinden, in der
- X: Stickstoff oder CH,
- R¹ und R²: gleich oder verschieden sind und unabhängig voneinander jeweils C₁-C₁₀-Alkyl, das gegebenenfalls durch C₁-C₄-Alkoxycarbonyl, C₁-C₄-Alkoxycarbonyloxy oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy oder Halogen substituiertes Phenyl oder R¹ und R² zusammen mit dem sie verbindenden Stickstoffatom einen 5- oder 6-gliedrigen gesättigten heterocyclischen Rest, der weitere Heteroatome aufweisen kann,
- R³: C₃-C₁₀-Alkyl oder C₅-C₇-Cycloalkyl,
- R⁴: Wasserstoff, C₁-C₄-Alkyl oder gegebenenfalls durch C₁-C₄-Alkyl, C₁-C₄-Alkoxy oder Halogen substituiertes Phenyl,
- R⁵: Cyano, Carbamoyl, C₁-C₈-Mono- oder Dialkylcarbamoyl, Carboxyl, C₁-C₈-Alkoxycarbonyl oder Benzimidazolyl und
- R⁶: C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy oder Halogen substituiertes Phenyl bedeuten.

Alle in der obengenannten Formel I auftretenden Alkyl- und Alkenylgruppen können sowohl geradkettig als auch verzweigt sein.

Wenn in der obengenannten Formel I substituierte Alkylgruppen auftreten, so weisen sie in der Regel 1 oder 2 Substituenten auf.

Wenn in der obengenannten Formel I substituierte Phenylgruppen auftreten, so weisen sie in der Regel 1 bis 3, vorzugsweise 1 oder 2, Substituenten auf.

Reste R¹, R², R⁴ und R⁶ sind z.B. Methyl oder Ethyl.

Reste R³ sind, wie weiterhin auch die Reste R¹, R², R⁴ und R⁶, z.B. Propyl, Isopropyl, Butyl, Isobutyl, sec-Butyl oder tert-Butyl.

Reste R¹, R², R³ und R⁶ sind weiterhin z.B. Pentyl, Isopentyl, tert-Pentyl, Hexyl, 2-Methylpentyl, Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5^{th} Edition, Vol. A 1, Seiten 290 bis 293, sowie Vol. A 10, Seiten 284 und 285), Cyclopentyl, Methylcyclopentyl, Dimethylcyclopentyl, Cyclohexyl, Methylcyclohexyl oder Cycloheptyl.

Reste R¹, R² und R⁶ sind weiterhin z.B. Benzyl, 1- oder 2-Phenylethyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7, Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl oder 3,6,9,12-Tetraoxatetradecyl.

Reste R¹ und R² sind weiterhin z.B. 2-Methoxycarbonylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 3-Propoxycarbonylpropyl, 2- oder 3-Butoxycarbonylpropyl, 2- oder 4-Methoxycarbonylbutyl, 2- oder 4-Ethoxycarbonylbutyl, 2- oder 4-Propoxycarbonylbutyl, 2- oder 4-Butoxycarbonylbutyl, 2-Methoxycarbonyloxyethyl, 2-Ethoxycarbonyloxyethyl, 2-Propoxycarbonyloxyethyl, 2-Isopropoxycarbonyloxyethyl, 2-Butoxycarbonyloxyethyl, 2- oder 3-Methoxycarbonyloxypropyl, 2- oder 3-Ethoxycarbonyloxypropyl, 2- oder 3-Propoxycarbonyloxypropyl, 2- oder 3-Butoxycarbonyloxypropyl, 2- oder 4-Methoxycarbonyloxybutyl, 2- oder 4-Ethoxycarbonyloxybutyl, 2- oder 4-Propoxycarbonyloxybutyl, 2- oder 4-Butoxycarbonyloxybutyl, Prop-1-en-3-yl, But-2-en-4-yl oder 2-Methylprop-1-en-3-yl.

Reste R⁶ sind weiterhin z.B. 2-Benzyloxyethyl, 2-Pyrazol-1-ylethyl, 2- oder 3-Benzyloxypropyl, 2- oder 3-Pyrazol-1-ylpropyl, 2- oder 4-Benzyloxybutyl, 2- oder 4-Pyrazol-1-ylbutyl, 2-Phenoxyethyl, 2- oder 3-Phenoxypropyl, 2- oder 4-Phenoxybutyl, 2-Cyclohexyloxyethyl, 2- oder 3-Cyclohexyloxypropyl oder 2- oder 4-Cyclohexyloxybutyl.

Reste R⁴ und R⁶ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,3-, 2,4- oder 2,6-Dimethylphenyl, 2-, 3- oder 4-Methoxyphenyl, 2-, 3- oder 4-Ethoxyphenyl, 2,3-, 2,4- oder 2,6-Dimethoxyphenyl, 2-, 3- oder 4-Fluorphenyl, 2-, 3- oder 4-Chlorphenyl oder 2-, 3- oder 4-Bromphenyl.

Reste R⁵ sind z.B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, Mono- oder Dipentylcarbamoyl, Mono- oder Dihexylcarbamoyl, Mono- oder Diheptylcarbamoyl, Mono- oder Dioctylcarbamoyl, Mono- oder Bis(2-ethylhexyl)carbamoyl, N-Methyl-N-ethylcarbamoyl, Methoxycarbonyl, Ethoxycarbonyl, Propoxycarbonyl, Isopropoxycarbonyl, Butoxycarbonyl, Isobutoxycarbonyl, Pentyloxycarbonyl, Isopentyloxycarbonyl, Hexyloxcarbonyl, Heptyloxycarbonyl, Octyloxycarbonyl, Isooctylcarbonyl oder 2-Ethylhexyloxycarbonyl.

Wenn die Reste R¹ und R² zusammen mit dem sie verbindenden Stickstoffatom einen 5- oder 6-gliedrigen gesättigten heterocyclischen Rest, der weitere Heteroatome aufweisen kann, bedeuten, so können dafür beispielsweise Pyrrolidinyl, Piperidinyl, Piperazinyl, N-(C₁-C₄-Alkyl)piperazinyl, Morpholinyl, Thiomorpholinyl, Thiomorpholinyl-S,S-dioxid oder Hexahydroazepinyl in Betracht kommen.

Wenn die Reste R¹ und R² in Formel I jeweils C₁-C₁₀-Alkyl bedeuten oder wenn einer der Reste R¹ und R² C₁-C₁₀-Alkyl und der andere C₅-C₇-Cycloalkyl bedeutet, so ist eine Verfahrensweise bevorzugt, bei der man einen Träger verwendet, auf dem sich ein oder mehrere Pyridonfarbstoffe der Formel I befinden, in der die Summe der in den beiden Resten R¹ und R² vorhandenen Kohlenstoffatome mindestens 7, vorzugsweise mindestens 8, beträgt.

Weiterhin bevorzugt ist eine Verfahrensweise, bei der man einen Träger verwendet, auf dem sich ein oder mehrere Pyridonfarbstoffe der Formel I befinden, in der X CH bedeutet.

Weiterhin bevorzugt ist eine Verfahrensweise, bei der man einen Träger verwendet, auf dem sich ein oder mehrere Pyridonfarbstoffe der Formel I befinden, in der R⁴ Methyl bedeutet.

Weiterhin bevorzugt ist eine Verfahrensweise, bei der man einen Träger verwendet, auf dem sich ein oder mehrere Pyridonfarbstoffe der Formel I befinden, in der R⁵ Cyano bedeutet.

Weiterhin bevorzugt ist eine Verfahrensweise, bei der man einen Träger verwendet, auf dem sich ein oder mehrere Pyridonfarbstoffe der Formel I befinden, in der R³ verzweigtes C₃-C₁₀-Alkyl, insbesondere C₃-C₈-Alkyl, bedeutet.

Weiterhin bevorzugt ist eine Verfahrensweise, bei der man einen Träger verwendet, auf dem sich ein oder mehrere Pyridonfarbstoffe der Formel I befinden, in der R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

Weiterhin bevorzugt ist eine Verfahrensweise, bei der man einen Träger verwendet, auf dem sich ein oder mehrere Pyridonfarbstoffe der Formel I befinden, in der R¹ und R² unabhängig voneinander jeweils C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl bedeuten.

Besonders bevorzugt ist eine Verfahrensweise, bei der man einen Träger verwendet, auf dem sich ein oder mehrere Pyridonfarbstoffe der Formel I befinden, in der R³ verzweigtes C₃-C₆-Alkyl, insbesondere Isopropyl oder Isobutyl, bedeutet.

Weiterhin besonders bevorzugt ist eine Verfahrensweise, bei der man einen Träger verwendet, auf dem sich ein oder mehrere Pyridonfarbstoffe der Formel I befinden, in der R⁶ C₄-C₈-Alkyl oder Cyclohexyl bedeutet.

Weiterhin besonders bevorzugt ist eine Verfahrensweise, bei der man einen Träger verwendet, auf dem sich ein oder mehrere Pyridonfarbstoffe der Formel I befinden, in der R¹ und R² unabhängig voneinander jeweils C₄-C₈-Alkyl, C₁-C₄-Alkoxy-C₂-C₄-alkyl, C₁-C₄-Alkoxycarbonyl-C₂-C₂-alkyl, Benzyl oder Prop-1-en-3-yl bedeuten oder in der einer der beiden Reste R¹ und R² C₁-C₄-Alkyl und der andere Cyclohexyl bedeutet.

Ganz besonders bevorzugt ist eine Verfahrensweise, bei der man einen Träger verwendet, auf dem sich ein oder mehrere Pyridonfarbstoffe der Formel I befinden, in der R¹ und R² unabhängig voneinander C₄-C₈-Alkyl, Benzyl oder Prop-1-en-3-yl bedeuten.

Weiterhin besonders bevorzugt ist eine Verfahrensweise, bei der man einen Träger verwendet, auf dem sich ein oder mehrere Pyridonfarbstoffe der Formel I befinden, in der R³ tert-Butyl bedeutet.

Die Pyridonfarbstoffe der Formel I sind an sich bekannt und beispielsweise in der älteren Patentanmeldung PCT/EP 94/04114 beschrieben oder können nach den dort genannten Methoden erhalten werden.

Zur Herstellung der für das erfindungsgemäße Verfahren benötigten Farbstoffträger werden die Pyridonfarbstoffe der Formel I in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffe vorzugsweise in molekulardispers gelöster Form. Die Druckfarbe kann mittels einer Rakel auf den inerten Träger aufgetragen und die Färbung an der Luft getrocknet werden. Geeignete organische Lösungsmittel für die Farbstoffmischungen sind z.B. solche, in denen die Löslichkeit der Farbstoffmischungen bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne daß dabei eine sichtbare Auskristallisation der Farbstoffmischung auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel:Farbstoff beträgt im allgemeinen 1:1 bis 10:1.

Als Hilfsmittel kommen z.B. Trennmittel in Betracht, wie sie in der US-A-5 132 438 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die im erfindungsgemäßen Verfahren der Anwendung gelangenden Pyridonfarbstoffe der Formel I zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie. Außerdem zeichnen sie sich durch hohe Brillanz aufgrund der hohen Transparenz im blauen und roten Spektralbereich aus.

Die folgenden Beispiele sollen die Erfindung weiter erläutern.

Allgemeine Vorschrift:
a) 10 g Farbstoff werden, gegebenenfalls unter kurzzeitigem Erwärmen auf 80 bis 90°C, in 100 g einer 10 gew.-%igen Lösung eines Bindemittels in einem Methylethylketon/Toluol/Cyclohexanon-Gemisch (4,5:2:2 v/v/v) eingerührt.
   Das Gemisch wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsübliches Videoprintpapier (Color Videoprint Paper der Firma Hitachi) verdruckt.
   Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,7 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind zusammen mit λₘₐₓ-Werten (gemessen auf dem Videoprintpapier) in den folgenden Tabellen 1 bis 3 aufgeführt.

Als Bindemittel diente dabei jeweils ein Produkt auf Basis von gesättigtem linearen Polyester und auf Basis von Polyvinylbutyral, wobei der jeweils erste Wert in den Tabellen bei Anwendung des Polyesters und der jeweils zweite Wert in den Tabellen bei Anwendung von Polyvinylbutyral als Bindemittel gemessen wurde.

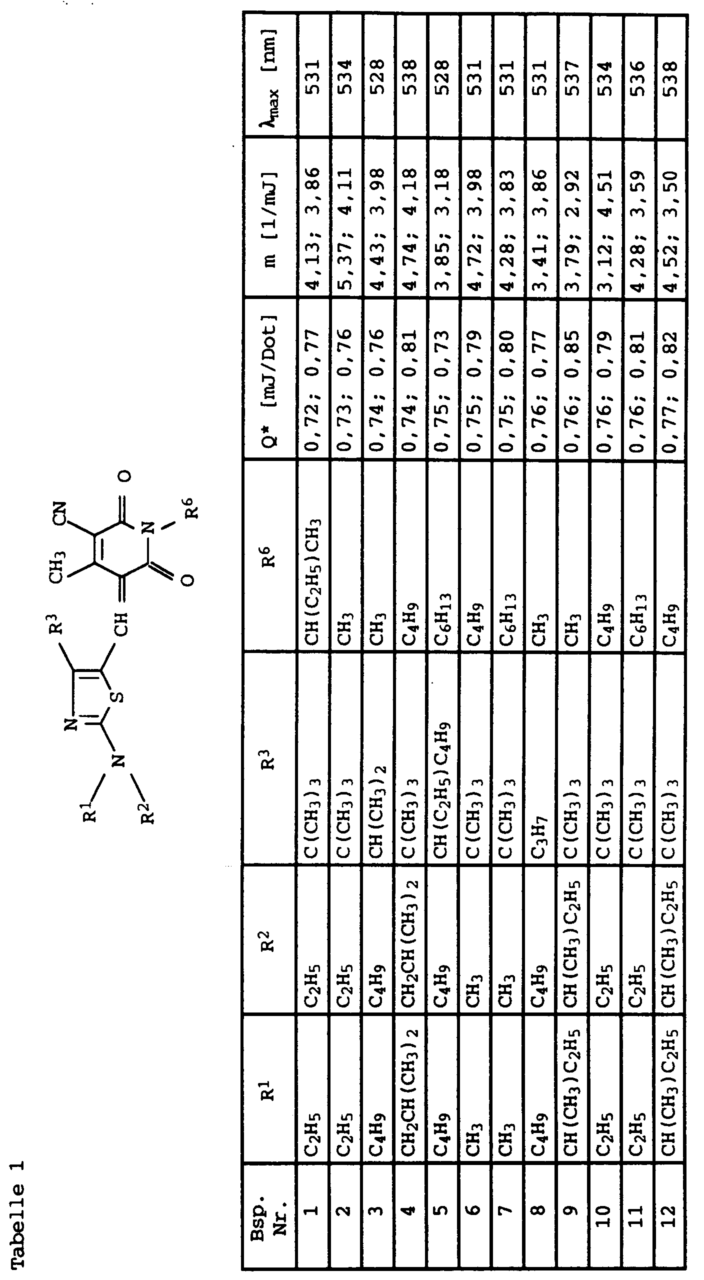

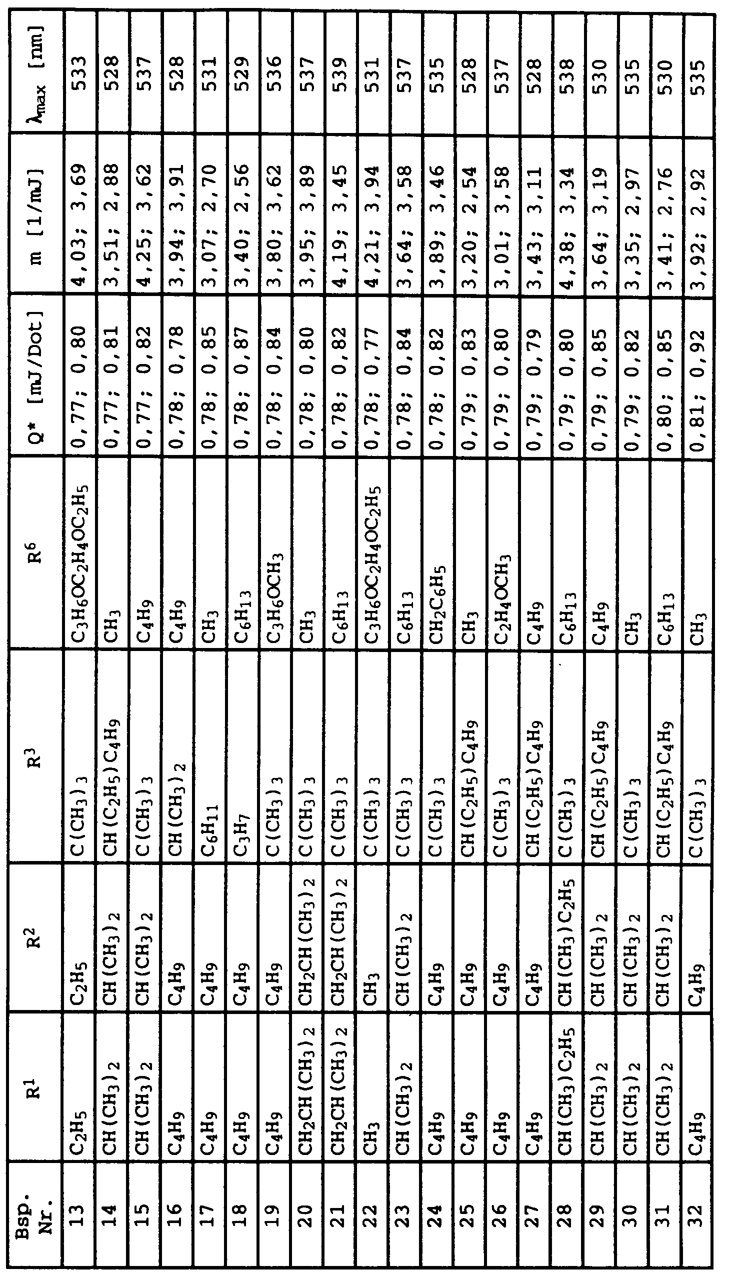

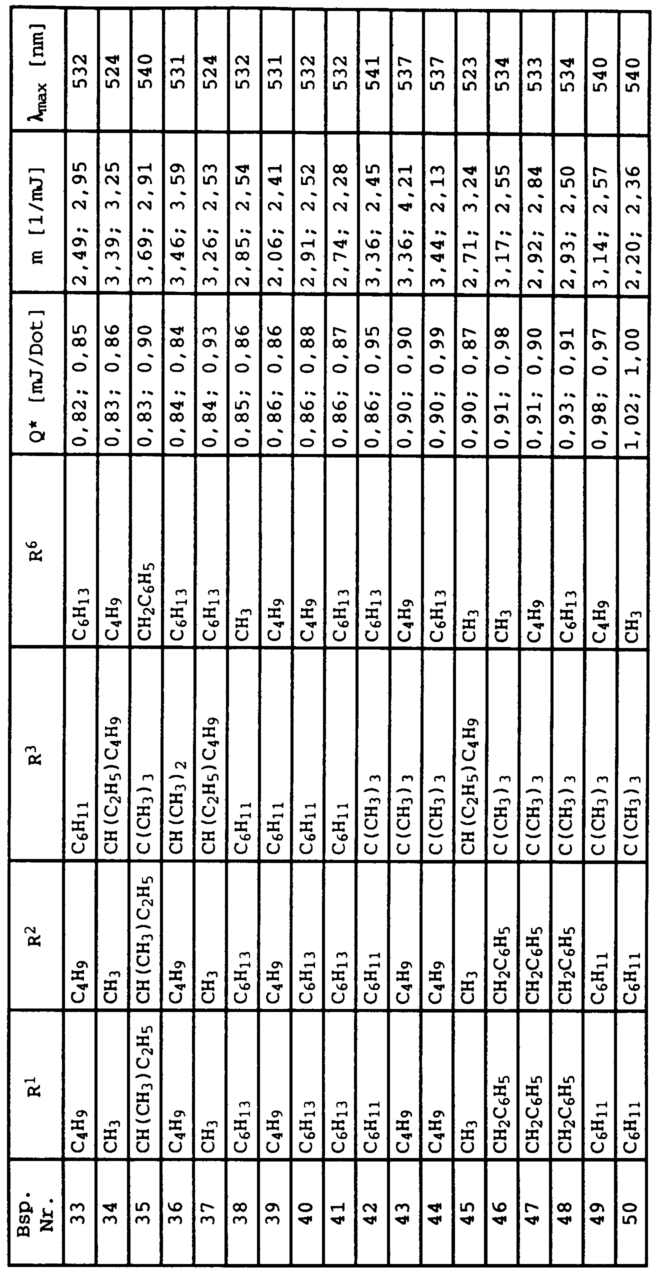

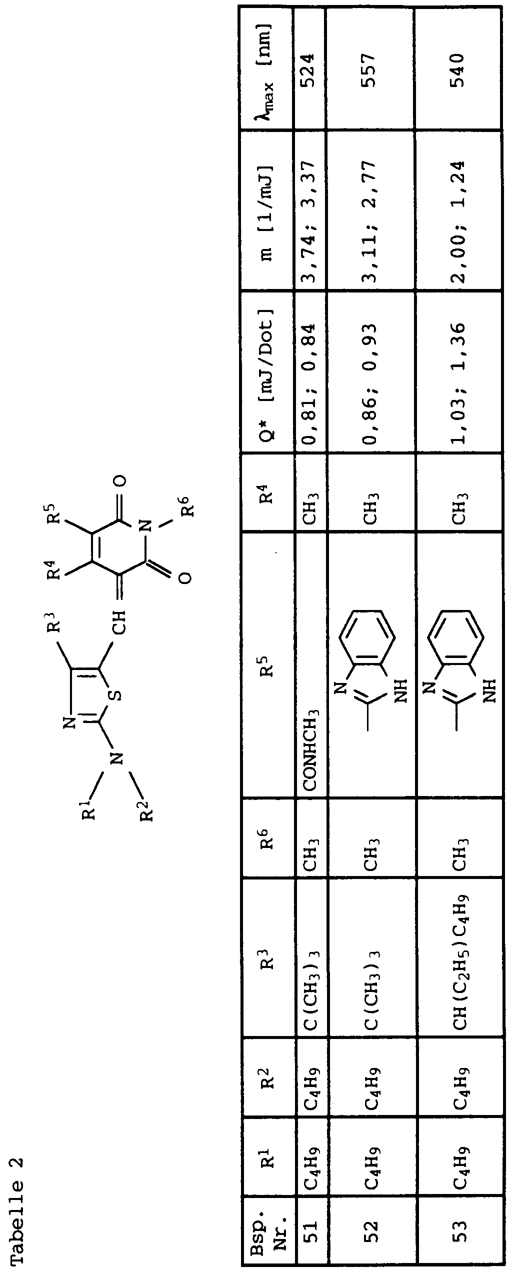

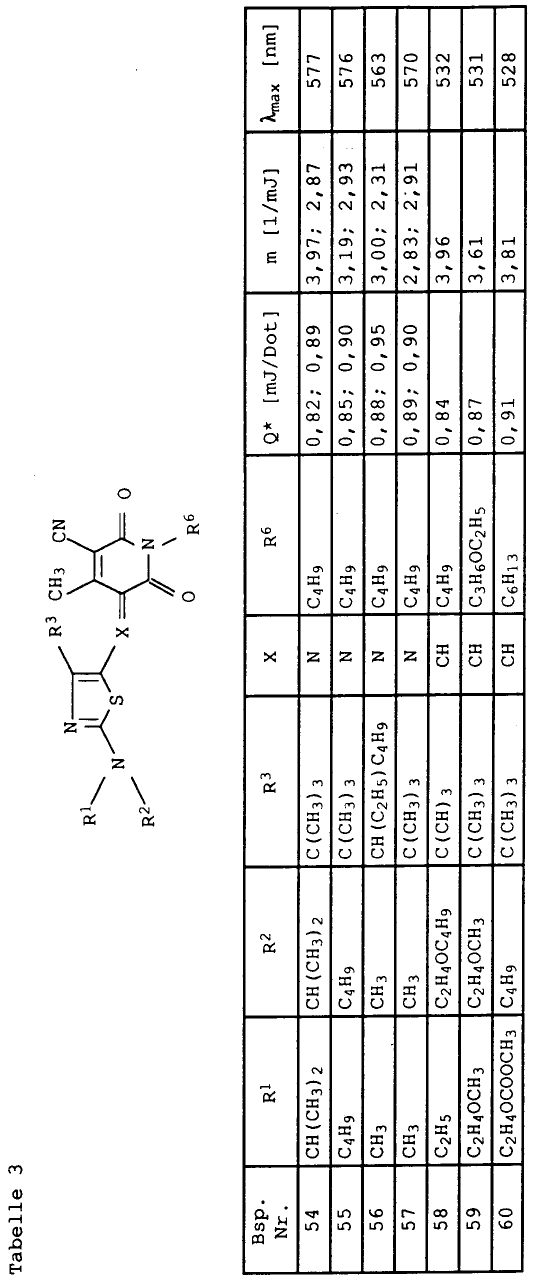

## Patentansprüche

1. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Pyridonfarbstoffe der Formel I 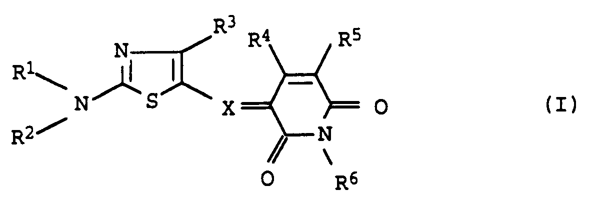 befinden, in der
X Stickstoff oder CH,
R¹ und R² gleich oder verschieden sind und unabhängig voneinander jeweils C₁-C₁₀-Alkyl, das gegebenenfalls durch C₁-C₄-Alkoxycarbonyl, C₁-C₄-Alkoxycarbonyloxy oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy oder Halogen substituiertes Phenyl oder R¹ und R² zusammen mit dem sie verbindenden Stickstoffatom einen 5- oder 6-gliedrigen gesättigten heterocyclischen Rest, der weitere Heteroatome aufweisen kann,
R³ C₃-C₁₀-Alkyl oder C₅-C₇-Cycloalkyl,
R⁴ Wasserstoff, C₁-C₄-Alkyl oder gegebenenfalls durch C₁-C₄-Alkyl, C₁-C₄-Alkoxy oder Halogen substituiertes Phenyl,
R⁵ Cyano, Carbamoyl, C₁-C₈-Mono- oder Dialkylcarbamoyl, Carboxyl, C₁-C₈-Alkoxycarbonyl oder Benzimidazolyl und
R⁶ C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy oder Halogen substituiertes Phenyl bedeuten.

2. Verfahren nach Anspruch 1, dadurch gekennzeichnet, daß X CH bedeutet.

3. Verfahren nach Anspruch 1, dadurch gekennzeichnet, daß R⁴ Methyl bedeutet.

4. Verfahren nach Anspruch 1, dadurch gekennzeichnet, daß R⁵ Cyano bedeutet.

5. Verfahren nach Anspruch 1, dadurch gekennzeichnet, daß R³ verzweigtes C₃-C₁₀-Alkyl bedeutet.

6. Verfahren nach Anspruch 1, dadurch gekennzeichnet, daß R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

7. Verfahren nach Anspruch 1, dadurch gekennzeichnet, daß wenn die Reste R¹ und R² jeweils C₁-C₁₀-Alkyl bedeuten oder wenn einer der Reste R¹ und R² C₁-₁₀-Alkyl und der andere C₅-C₇-Cycloalkyl bedeutet, die Summe der in den beiden Resten R¹ und R² vorhandenen Kohlenstoffatome mindestens 7 beträgt.

## Claims

1. A process for transferring dyes from a transfer to plastic-coated paper by diffusion or sublimation with the aid of an energy source, which comprises using a transfer comprising one or more pyridone dyes of the formula I 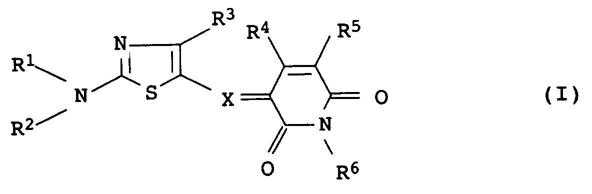 where
X is nitrogen or CH,
R¹ and R² are identical or different and each is independently of the other C₁-C₁₀-alkyl with or without substitution by C₁-C₄-alkoxycarbonyl, C₁-C₄-alkoxycarbonyloxy or phenyl and with or without interruption by from 1 to 4 oxygen atoms in ether function, C₅-C₇-cycloalkyl, C₃-C₄-alkenyl, unsubstituted or C₁-C₄-alkyl-, C₁-C₄-alkoxy- or halogen-substituted phenyl, or R¹ and R² are together with the nitrogen atom joining them together a 5- or 6-membered saturated heterocyclic radical with or without further hetero atoms,
R³ is C₃-C₁₀-alkyl or C₅-C₇-cycloalkyl,
R⁴ is hydrogen, C₁-C₄-alkyl or unsubstituted or C₁-C₄-alkyl-, C₁-C₄-alkoxy- or halogen-substituted phenyl,
R⁵ is cyano, carbamoyl, mono- or di(C₁-C₈-alkyl)carbamoyl, carboxyl, C₁-C₈-alkoxycarbonyl or benzimidazolyl, and
R⁶ is C₁-C₁₀-alkyl with or without substitution by phenyl, phenoxy, cyclohexyloxy or pyrazolyl and with or without interruption by from 1 to 4 oxygen atoms in ether function, C₅-C₇-cycloalkyl or unsubstituted or C₁-C₄-alkyl-, C₁-C₄-alkoxy- or halogen-substituted phenyl.

2. A process as claimed in claim 1, wherein X is CH.

3. A process as claimed in claim 1, wherein R⁴ is methyl.

4. A process as claimed in claim 1, wherein R⁵ is cyano.

5. A process as claimed in claim 1, wherein R³ is branched C₃-C₁₀-alkyl.

6. A process as claimed in claim 1, wherein R⁶ is C₁-C₈-alkyl, cyclopentyl, cyclohexyl or unsubstituted or C₁-C₄-alkyl- or C₁-C₄-alkoxy-substituted phenyl.

7. A process as claimed in claim 1, wherein, if R¹ and R² are each C₁-C₁₀-alkyl or if one of R¹ and R² is C₁-C₁₀-alkyl and the other is C₅-C₇-cycloalkyl, the sum of the carbon atoms present in the two radicals R¹ and R² is at least 7.

## Revendications

1. Procédé de transfert de colorants, d'un support sur un papier revêtu de matière plastique, par diffusion ou sublimation, à l'aide d'une source d'énergie, caractérisé en ce que l'on utilise un support sur lequel se trouvent un ou plusieurs colorants pyridoniques de formule I 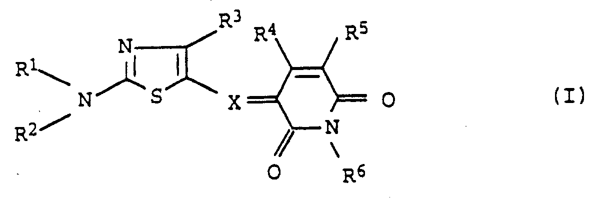 dans laquelle
X représente un atome d'azote ou CH,
R¹ et R² sont identiques ou différents et représentent chacun, indépendamment l'un de l'autre, un groupement alkyle en C₁-C₁₀, qui est éventuellement substitué par un groupement alcoxycarbonyle en C₁-C₄, alcoxycarbonyloxy en C₁-C₄ ou phényle et qui peut être interrompu par 1 à 4 atomes d'oxygène en fonction éther, un groupement cycloalkyle en C₅-C₇, un groupement alcényle en C₃-C₄, un groupement phényle éventuellement substitué par un groupement alkyle en C₁-C₄, alcoxy en C₁-C₄ ou par un atome d'halogène, ou bien R¹ et R² forment, avec l'atome d'azote qui les relie, un reste hétérocyclique saturé à 5 ou 6 maillons, qui peut comporter d'autres hétéroatomes,
R³ représente un groupement alkyle en C₃-C₁₀ ou un groupement cycloalkyle en C₅-C₇,
R⁴ représente un atome d'hydrogène, un groupement alkyle en C₁-C₄ ou un groupement phényle éventuellement substitué par un groupement alkyle en C₁-C₄, alcoxy en C₁-C₄ ou par un atome d'halogène,
R⁵ représente un groupement cyano, un groupement carbamoyle, un groupement mono- ou dialkylcarbamoyle en C₁-C₈, un groupement carboxyle, un groupement alcoxycarbonyle en C₁-C₈ ou benzimidazolyle et
R⁶ représente un groupement alkyle en C₁-C₁₀, qui est éventuellement substitué par un groupement phényle, phénoxy, cyclohexyloxy ou pyrazolyle et peut être interrompu par 1 à 4 atomes d'oxygène en fonction éther, un groupement cycloalkyle en C₅-C₇ ou un groupement phényle éventuellement substitué par un groupement alkyle en C₁-C₄, alcoxy en C₁-C₄ ou par un atome d'halogène.

2. Procédé selon la revendication 1, caractérisé en ce que X représente CH.

3. Procédé selon la revendication 1, caractérisé en ce que R⁴ représente un groupement méthyle.

4. Procédé selon la revendication 1, caractérisé en ce que R⁵ représente un groupement cyano.

5. Procédé selon la revendication 1, caractérisé en ce que R³ représente un groupement alkyle en C₃-C₁₀ ramifié.

6. Procédé selon la revendication 1, caractérisé en ce que R⁶ représente un groupement alkyle en C₁-C₈, cyclopentyle, cyclohexyle ou phényle éventuellement substitué par un groupement alkyle en C₁-C₄ ou alcoxy en C₁-C₄.

7. Procédé selon la revendication 1, caractérisé en ce que lorsque les restes R¹ et R² représentent chacun un groupement alkyle en C₁-C₁₀ ou, lorsque l'un des restes R¹ et R² représente un groupement alkyle en C₁-C₁₀ et l'autre représente un groupement cycloalkyle en C₅-C₇, la somme des atomes de carbone des deux restes R¹ et R² s'élève au moins à 7.
